# EUROPEAN PATENT APPLICATION

(11) **EP 4 852 574 A1**
(43) Date of publication of application: **09.12.2026**
(21) Application number: 25747423.9
(22) Date of filing: 03.01.2025
(51) Int. Cl.: H04W 72/1268, H04W 72/04

(54) **UPLINK DATA TRANSMISSION METHOD, FIRST TERMINAL, NETWORK DEVICE, AND APPARATUS**

(30) Priority: 02.02.2024 CN 202410151957
(71) Applicant: Datang Mobile Communications Equipment Co., Ltd., Beijing 100085 (CN)
(72) Inventor: GUAN, Juan, Beijing 100085 (CN)
(74) Representative: Studio Torta S.p.A.
(86) International application number: PCT/CN2025/070547
(87) International publication number: WO 2025/161847

(57) **Abstract**

Provided in the present disclosure are an uplink data transmission method, a first terminal, a network device, and an apparatus. The method comprises: receiving indication information sent by a network device, wherein the indication information is used for indicating an orthogonal cover code (OCC) sequence of a first terminal, the first terminal being one of a plurality of terminals, and OCC sequences of any two terminals among the plurality of terminals being orthogonal to each other; processing initial uplink data based on the OCC sequence of the first terminal and transmission configuration parameters, so as to obtain target uplink data; and sending the target uplink data to the network device.

## Description

### CROSS-REFERENCES TO RELATED APPLICATIONS

The present application claims priority to Chinese Patent Application No. 202410151957X, filed on February 2, 2024, entitled "Uplink Data Transmission Method, First Terminal, Network Device and Apparatus", which is incorporated herein by reference in its entirety.

### FIELD

The present application relates to a field of communication technology, and in particular to an uplink data transmission method, a first terminal, a network device and an apparatus.

### BACKGROUND

In channel transmission for an uplink service, a terminal may transmit uplink data to a network device based on corresponding time-frequency domain resources.

However, when a number of terminals is large, since resource is limited, an uplink capacity of a system is limited accordingly. For example, in a Non-Terrestrial Network (NTN), a coverage area of a network device is usually much larger than that of a terrestrial system, and a number of terminals is also significantly increased, leading to a prominent problem of limited uplink capacity of the system. Therefore, there is an urgent need to provide a solution to improve the uplink capacity of the system.

### BRIEF SUMMARY

According to the present application, there is provided an uplink data transmission method, a first terminal, a network device and an apparatus, so as to achieve an increase in uplink capacity.

According to an embodiment of the present application, there is provided an uplink data transmission method performed by a first terminal, including:

receiving indication information for indicating an orthogonal cover code, OCC, sequence for the first terminal transmitted from a network device, where the first terminal is one of multiple terminals, and the OCC sequences of any two terminals among the multiple terminals are orthogonal to each other;
processing initial uplink data based on the OCC sequence for the first terminal and a transmission configuration parameter so as to obtain target uplink data; and
transmitting the target uplink data to the network device.

In some embodiments, the indication information includes at least one of:
the OCC sequence for the first terminal;
an OCC sequence matrix including respective OCC sequences of the multiple terminals; or
an OCC sequence index for the first terminal.

In some embodiments, the indication information is carried by at least one of:
a higher-layer parameter; or
downlink control information, DCI.

In some embodiments, the transmission configuration parameter includes at least one of:
a number of repetitions of the initial uplink data;
a number of time-domain symbols used for data transmission; or
a number of slots for transport block processing over multiple slots, TBoMS.

In some embodiments, the OCC sequence for the first terminal satisfies any one of:
a number of spreading factors included in the OCC sequence for the first terminal being equal to a number of repetitions of the initial uplink data; or
a number of spreading factors included in the OCC sequence for the first terminal being equal to a number of time-domain symbols mapped to the initial uplink data, where the number of time-domain symbols mapped to the initial uplink data is equal to a number of time-domain symbols used for data transmission, or is equal to a product of the number of time-domain symbols used for data transmission and a number of slots for TBoMS.

In some embodiments, when the number of spreading factors included in the OCC sequence for the first terminal is equal to the number of repetitions of the initial uplink data, the target uplink data includes respective uplink data corresponding to multiple repetitions of transmission, and
where respective uplink data corresponding to the multiple repetitions of transmission is a product of a corresponding spreading factor in the OCC sequence for the first terminal and the initial uplink data.

In some embodiments, when the number of spreading factors included in the OCC sequence for the first terminal is equal to the number of time-domain symbols mapped to the initial uplink data, the target uplink data includes respective target time-domain data corresponding to the multiple time-domain symbols, and
where, for each time-domain symbol, the target time-domain data corresponding to the time-domain symbol is equal to a product of the initial time-domain data mapped from the initial uplink data to the time-domain symbol and a spreading factor, to which the time-domain symbol corresponds, in the OCC sequence for the first terminal.

According to an embodiment of the present application, there is provided an uplink data transmission method performed by a network device, including:
transmitting indication information for indicating an orthogonal cover code, OCC, sequence for a first terminal to the first terminal, where the first terminal is one of multiple terminals, and the OCC sequences of any two terminals among the multiple terminals are orthogonal to each other; and
receiving target uplink data transmitted from the first terminal, where the target uplink data is data obtained by processing initial uplink data based on the OCC sequence for the first terminal and a transmission configuration parameter.

In some embodiments, the indication information includes at least one of:
the OCC sequence for the first terminal;
an OCC sequence matrix including respective OCC sequences of the multiple terminals; or
an OCC sequence index for the first terminal.

In some embodiments, the indication information is carried by at least one of:
a higher-layer parameter; or
DCI.

In some embodiments, the transmission configuration parameter includes at least one of:
a number of repetitions of the initial uplink data;
a number of time-domain symbols used for data transmission; or
a number of slots for TBoMS.

In some embodiments, the OCC sequence for the first terminal satisfies any one of:
a number of spreading factors included in the OCC sequence for the first terminal being equal to a number of repetitions of the initial uplink data; or
a number of spreading factors included in the OCC sequence for the first terminal being equal to a number of time-domain symbols mapped to the initial uplink data, where the number of time-domain symbols mapped to the initial uplink data is equal to a number of time-domain symbols used for data transmission, or is equal to a product of the number of time-domain symbols used for data transmission and a number of slots for TBoMS.

In some embodiments, when the number of spreading factors included in the OCC sequence for the first terminal is equal to the number of repetitions of the initial uplink data, the target uplink data includes respective uplink data corresponding to multiple repetitions of transmission, and
where the respective uplink data corresponding to the multiple repetitions of transmission is a product of a corresponding spreading factor in the OCC sequence for the first terminal and the initial uplink data.

In some embodiments, when the number of spreading factors included in the OCC sequence for the first terminal is equal to the number of time-domain symbols mapped to the initial uplink data, the target uplink data includes respective target time-domain data corresponding to the multiple time-domain symbols, and
where, for each time-domain symbol, the target time-domain data corresponding to the time-domain symbol is equal to a product of the initial time-domain data mapped from the initial uplink data to the time-domain symbol and a spreading factor, to which the time-domain symbol corresponds, in the OCC sequence for the first terminal.

According to an embodiment of the present application, there is provided a first terminal, including:
a memory used for storing a computer program; a transceiver used for transmitting and receiving data under the control of a processor; and the processor used for reading the computer program in the memory and perform operations of:
receiving indication information for indicating an orthogonal cover code, OCC, sequence for a first terminal transmitted from a network device, where the first terminal is one of multiple terminals, and the OCC sequences of any two terminals among the multiple terminals are orthogonal to each other;
processing initial uplink data based on the OCC sequence for the first terminal and a transmission configuration parameter so as to obtain target uplink data; and
transmitting the target uplink data to the network device.

In some embodiments, the indication information includes at least one of:
the OCC sequence for the first terminal;
an OCC sequence matrix including respective OCC sequences of the multiple terminals; or
an OCC sequence index for the first terminal.

In some embodiments, the indication information is carried by at least one of:
a higher-layer parameter; or
DCI.

In some embodiments, the transmission configuration parameter includes at least one of:
a number of repetitions of the initial uplink data;
a number of time-domain symbols used for data transmission; or
a number of slots for TBoMS.

In some embodiments, the OCC sequence for the first terminal satisfies any one of:
a number of spreading factors included in the OCC sequence for the first terminal being equal to a number of repetitions of the initial uplink data; or
a number of spreading factors included in the OCC sequence for the first terminal being equal to a number of time-domain symbols mapped to the initial uplink data, where the number of time-domain symbols mapped to the initial uplink data is equal to a number of time-domain symbols used for data transmission, or is equal to a product of the number of time-domain symbols used for data transmission and a number of slots for TBoMS.

In some embodiments, when the number of spreading factors included in the OCC sequence for the first terminal is equal to the number of repetitions of the initial uplink data, the target uplink data includes respective uplink data corresponding to multiple repetitions of transmission, and
where the respective uplink data corresponding to the multiple repetitions of transmission is a product of a corresponding spreading factor in the OCC sequence for the first terminal and the initial uplink data.

In some embodiments, when the number of spreading factors included in the OCC sequence for the first terminal is equal to the number of time-domain symbols mapped to the initial uplink data, the target uplink data includes respective target time-domain data corresponding to the multiple time-domain symbols, and
where, for each time-domain symbol, the target time-domain data corresponding to the time-domain symbol is equal to a product of the initial time-domain data mapped from the initial uplink data to the time-domain symbol and a spreading factor, to which the time-domain symbol corresponds, in the OCC sequence for the first terminal.

According to an embodiment of the present application, there is provided a network device, including:
a memory used for storing computer programs; a transceiver used for transmitting and receiving data under the control of a processor; and the processor used for reading the computer programs in the memory and perform operations of:
transmitting indication information for indicating an orthogonal cover code, OCC, sequence for a first terminal to the first terminal, where the first terminal is one of multiple terminals, and the OCC sequences of any two terminals among the multiple terminals are orthogonal to each other; and
receiving target uplink data transmitted from the first terminal, where the target uplink data is data obtained by processing initial uplink data based on the OCC sequence for the first terminal and a transmission configuration parameter.

In some embodiments, where the indication information includes at least one of:
the OCC sequence for the first terminal;
an OCC sequence matrix including respective OCC sequences of the multiple terminals; or
an OCC sequence index for the first terminal.

In some embodiments, the indication information is carried by at least one of:
a higher-layer parameter; or
DCI.

In some embodiments, the transmission configuration parameter includes at least one of:
a number of repetitions of the initial uplink data;
a number of time-domain symbols used for data transmission; or
a number of slots for TBoMS.

In some embodiments, the OCC sequence for the first terminal satisfies any one of:
a number of spreading factors included in the OCC sequence for the first terminal being equal to a number of repetitions of the initial uplink data; or
a number of spreading factors included in the OCC sequence for the first terminal being equal to a number of time-domain symbols mapped to the initial uplink data, where the number of time-domain symbols mapped to the initial uplink data is equal to a number of time-domain symbols used for data transmission, or is equal to a product of the number of time-domain symbols used for data transmission and the number of slots for TBoMS.

In some embodiments, when the number of spreading factors included in the OCC sequence for the first terminal is equal to the number of repetitions of the initial uplink data, the target uplink data includes respective uplink data corresponding to multiple repetitions of transmission, and
where the respective uplink data corresponding to the multiple repetitions of transmission is a product of a corresponding spreading factor in the OCC sequence for the first terminal and the initial uplink data.

In some embodiments, when the number of spreading factors included in the OCC sequence for the first terminal is equal to the number of time-domain symbols mapped to the initial uplink data, the target uplink data includes respective target time-domain data corresponding to the multiple time-domain symbols, and
where, for each time-domain symbol, the target time-domain data corresponding to the time-domain symbol is equal to a product of the initial time-domain data mapped from the initial uplink data to the time-domain symbol and a spreading factor, to which the time-domain symbol corresponds, in the OCC sequence for the first terminal.

According to an embodiment of the present application, there is provided an uplink data transmission apparatus used in a first terminal, including:
a first receiving module for receiving indication information for indicating an orthogonal cover code, OCC, sequence for the first terminal transmitted from a network device, where the first terminal is one of multiple terminals, and the OCC sequences of any two terminals among the multiple terminals are orthogonal to each other;
a processing module for processing initial uplink data based on the OCC sequence for the first terminal and a transmission configuration parameter so as to obtain target uplink data; and
a first transmitting module for transmitting the target uplink data to the network device.

According to an embodiment of the present application, there is provided an uplink data transmission apparatus used in a network device, including:
a second transmitting module for transmitting indication information for indicating an orthogonal cover code, OCC, sequence for a first terminal to the first terminal, where the first terminal is one of multiple terminals, and the OCC sequences of any two terminals among the multiple terminals are orthogonal to each other; and
a second receiving module for receiving target uplink data transmitted from the first terminal, where the target uplink data is data obtained by processing initial uplink data based on the OCC sequence for the first terminal and a transmission configuration parameter.

According to an embodiment of the present application, there is provided a processor-readable storage medium storing a computer program for causing a computer to perform the uplink data transmission method as described above.

With the uplink data transmission method, first terminal, network device, and apparatus provided in the present application, the first terminal receives indication information transmitted from the network device. The indication information indicates the OCC sequence for the first terminal. Then, based on the OCC sequence for the first terminal and a transmission configuration parameter, initial uplink data is processed to obtain target uplink data, which is then transmitted to the network device. Since the OCC sequences for any two terminals among multiple terminals configured in the network device are orthogonal to each other, the target uplink data obtained after processing the initial uplink data using the OCC sequences of each terminal and the transmission configuration parameter can avoid cross-interference, enabling uplink data transmission from the multiple terminals on the same time-frequency resource, thereby improving the uplink capacity of a system.

### BRIEF DESCRIPTION OF THE DRAWINGS

In order to more clearly illustrate technical solutions in the present application or the related art, drawings used in the description of the embodiments or the related art are briefly introduced below. The drawings described below are some embodiments of the present application. For those skilled in the art, other drawings can be obtained based on these drawings without creative efforts.
FIG. 1 is a schematic diagram of a PUSCH repetition;
FIG. 2 is a schematic diagram of a combined use of TBoMS and PUSCH repetition;
FIG. 3 is a flowchart of an uplink data transmission method according to an embodiment of the present application;
FIG. 4 is a first schematic diagram of uplink transmission according to an embodiment of the present application;
FIG. 5 is a second schematic diagram of uplink transmission according to an embodiment of the present application;
FIG. 6 is a third schematic diagram of uplink transmission according to an embodiment of the present application;
FIG. 7 is a schematic structural diagram of a first terminal according to an embodiment of the present application;
FIG. 8 is a schematic structural diagram of a network device according to an embodiment of the present application;
FIG. 9 is a first schematic structural diagram of an uplink data transmission device according to an embodiment of the present application; and
FIG. 10 is a second schematic structural diagram of an uplink data transmission device according to an embodiment of the present application.

### DETAILED DESCRIPTION

To make objectives, technical solutions, and advantages of the present application clearer, the technical solutions of the present application are clearly and thoroughly described below with reference to the accompanying drawings. Described embodiments are only some embodiments of the present application, not all embodiments. Based on the embodiments of the present application, all other embodiments obtained by those skilled in the art without creative efforts are within protection scope of the present application.

Currently, in a New Radio (NR) system, uplink transmission supports two types of waveforms: Cyclic Prefix Orthogonal Frequency Division Multiplexing (CP-OFDM) and Discrete Fourier Transform-Spread Orthogonal Frequency Division Multiplexing (DFT-s-OFDM). The DFT-s-OFDM waveform has a relatively low peak-to-average power ratio (PAPR).

A power amplifier typically plays a crucial role in communications, exhibiting two typical operating states: a saturation region and a linear region. The power amplifier operating in the saturation region prevents signal demodulation. To ensure demodulation performance, the power amplifier needs to fall back to the linear region. However, excessive fallback reduces efficiency of the power amplifier. Therefore, the DFT-s-OFDM waveform with a low PAPR has a wider range of applications, especially in a power-constrained satellite system. In all embodiments of the present application, uplink transmission is implemented based on DFT-s-OFDM waveform.

Currently, related art supports code division multiplexing (CDM) of demodulation reference signal (DMRS) of a Physical Uplink Shared Channel (PUSCH), in which PUSCH DMRS sequence r(n) supports multi-user transmission through time-frequency orthogonal code division, as shown in the following equation (1): ${{a}^{˜}}_{k , l}^{\left({p}_{0}, μ\right)} = {w}_{f} \left(k′\right) {w}_{t} \left(l′\right) r \left(2n+k′\right)$ (1)
where the sequence r(n) is mapped to an intermediate quantity ${{a}^{˜}}_{k , l}^{\left({p}_{0}, μ\right)}$ according to the condition of equation (1). $k = 4 n + 2 k ′ + Δ ; k ′ = 0 , 1 ; l = \overline{l} + l ′ ; n = 0 , 1 , … .$

Based on an antenna port **p̃,** and referring to Table 1 below, values of w_{f}(k' ) and wₜ(l' ) can be determined, and thus the intermediate quantity ${{a}^{˜}}_{k , l}^{\left({p}_{0}, μ\right)}$ can be determined.

**Table 1**

| **p̃** | CDM group λ | Δ | w_{f}(k') | wₜ(l') |
|---|---|---|---|---|
| | | | [w_{f}(0) ... w_{f}(3)] | [wₜ(0) wₜ(1)] |
| 0 | 0 | 0 | [+1 +1 +1 +1] | [+1 +1] |
| 1 | 0 | 0 | [+1 -1 +1 -1] | [+1 +1] |
| 2 | 1 | 1 | [+1 +1 +1 +1] | [+1 +1] |
| 3 | 1 | 1 | [+1 -1 +1 -1] | [+1 +1] |
| 4 | 0 | 0 | [+1 +1 +1 +1] | [+1 -1] |
| 5 | 0 | 0 | [+1 -1 +1 -1] | [+1 -1] |
| 6 | 1 | 1 | [+1 +1 +1 +1] | [+1 -1] |
| 7 | 1 | 1 | [+1 -1 +1 -1] | [+1 -1] |
| 8 | 0 | 0 | [+1 +j -1 -j] | [+1 +1] |
| 9 | 0 | 0 | [+1 -j -1 +j] | [+1 +1] |
| 10 | 1 | 1 | [+1 +j -1 -j] | [+1 +1] |
| 11 | 1 | 1 | [+1 -j -1 +j] | [+1 +1] |
| 12 | 0 | 0 | [+1 +j -1 -j] | [+1 -1] |
| 13 | 0 | 0 | [+1 -j -1 +j] | [+1 -1] |
| 14 | 1 | 1 | [+1 +j -1 -j] | [+1 -1] |

The transmission of PUSCH DMRS is described in the above embodiments. The transmission of PUSCH in related art is described below.

Regarding uplink transmission of PUSCH, currently, a maximum uplink transmission can support repetition up to 32 times. While repetition improves link demodulation performance, it leads to a decrease in system capacity. Generally, two repetitions can achieve a 3dB gain, but also halve the capacity. Data transmission supports single-layer, single-antenna-port transmission.

The uplink transmission of PUSCH can support multi-slot data transmission (TB processing over multiple slots PUSCH, ThoMS). TboMS is a technique that uses multiple slots to transmit a Transport Block (TB), which can increase a number of physical resource elements (REs), thereby allowing the use of lower modulation and coding schemes so as to increase uplink coverage.

TboMS can be configured simultaneously with PUSCH repetition, or only PUSCH repetition can be configured.

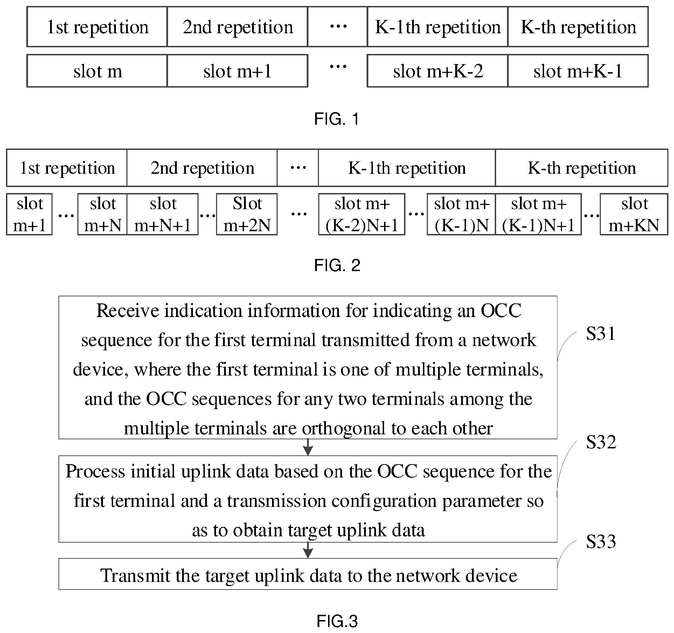

FIG. 1 is a schematic diagram of a PUSCH repetition. As shown in FIG. 1, a number of repetitions is K, and the network device is not configured with slots for TBoMS, or a number of slots for TBoMS is 1. For any one of the K repetitions, one TB is transmitted through one slot. For example, in the first repetition, uplink transmission is performed through slot m, in the second repetition, uplink transmission is performed through slot m+1, and so on.

FIG. 2 is a schematic diagram of the combined use of TBoMS and PUSCH repetition. As shown in FIG. 2, the number of repetitions is K, and the number of slots for TBoMS is N (N is greater than 1). For any one of the K repetitions, one TB is transmitted through N slots. For example, in the first repetition, uplink transmission is performed through slots m+1 to m+N, in the second repetition, uplink transmission is performed through slots m+N+1 to m+2N, and so on.

However, currently related art only supports CDM for PUSCH DMRS, not CDM for PUSCH, resulting in a limitation on terminals that can transmit data. When the number of terminals is large, the uplink capacity of the system is limited due to resource constraints.

Based on the above, according to embodiments of the present application, there is provided an uplink data transmission method, in order to improve the uplink capacity of the system. The solution of the embodiments of the present application is described below with reference to the accompanying drawings.

FIG.3 is a flowchart of an uplink data transmission method according to the embodiments of the present application. As shown in FIG.3, the method is performed by a first terminal and includes the following steps.

At step S31, receive indication information for indicating an orthogonal cover code (OCC) sequence for the first terminal transmitted from a network device, where the first terminal is one of multiple terminals, and the OCC sequences of any two terminals among the multiple terminals are orthogonal to each other

OCC is a coding technique used in communication systems. The principle of OCC is to divide original information into multiple sub-information for encoding, ensuring that codewords formed after encoding are orthogonal to each other, thereby achieving efficient transmission and decoding.

In order to improve the uplink capacity of the system, a network device configures corresponding OCC sequences for multiple terminals and instructs each terminal via indication information. The OCC sequence includes multiple spreading factors. For any two terminals among the multiple terminals, the OCC sequences for any two terminals are orthogonal to each other. For a first terminal among the multiple terminals, the network device transmits indication information to the first terminal, which indicates the OCC sequence for the first terminal.

At step S32, process initial uplink data based on the OCC sequence for the first terminal and a transmission configuration parameter so as to obtain target uplink data.

The initial uplink data is the data to be transmitted from the first terminal. The first terminal can transmit the initial uplink data to the network device through repetitions or without repetitions, to which it is not limited in the embodiments of the present application. The target uplink data is the data obtained after performing corresponding time-domain spread spectrum processing on the initial uplink data using OCC sequence for the first terminal and a transmission configuration parameter.

The transmission configuration parameter is a parameter configured by the network device related to the uplink data transmission of the first terminal. The parameter determines corresponding configurations for uplink data transmission of the first terminal, such as whether to perform repetitions, whether to configure TBoMS, etc.

Based on the OCC sequence for the first terminal and the transmission configuration parameter, the initial uplink data can be processed. Specifically, based on the transmission configuration parameter, multiple sub-information of the initial uplink data can be determined, while based on the OCC sequence for the first terminal, the multiple sub-information of the initial uplink data can be encoded, so as to obtain the target uplink data.

At step S33, transmit the target uplink data to the network device.

After obtaining the target uplink data, the first terminal transmits the target uplink data to the network device. Since the target uplink data is obtained by processing the initial uplink data based on the OCC sequence for the first terminal and the transmission configuration parameter, upon receiving the target uplink data, the network device can decode the initial uplink data based on the OCC sequence for the first terminal and the transmission configuration parameter, thereby completing the uplink data transmission from the first terminal to the network device.

Furthermore, since the OCC sequences for any two terminals among the multiple terminals are orthogonal to each other, the target uplink data obtained after each terminal processes the initial uplink data based on corresponding OCC sequence and the transmission configuration parameter avoids cross-interference, realizing code division multiplexing transmission of uplink data by multiple terminals.

With the uplink data transmission method according to the embodiments of the present application, the first terminal receives indication information transmitted from the network device. The indication information indicates the OCC sequence for the first terminal. Then, based on the OCC sequence for the first terminal and the transmission configuration parameter, the initial uplink data is processed to obtain target uplink data, which is then transmitted to the network device. Since the OCC sequences for any two terminals among the multiple terminals configured by the network device are orthogonal to each other, the target uplink data obtained after each terminal processes the initial uplink data using the OCC sequences and the transmission configuration parameter can avoid cross-interference, enabling uplink data transmission from the multiple terminals on the same time-frequency resource, thereby improving the uplink capacity of the system.

In some embodiments, the indication information transmitted from the network device to the first terminal includes at least one of the following items 1.1 to 1.3. The network device explicitly or implicitly indicates the OCC sequence for the first terminal through the indication information.

### 1.1 OCC sequence for the first terminal.

After configuring the respective OCC sequences for the multiple terminals, the network device transmits indication information to the first terminal among the multiple terminals. The indication information includes the OCC sequence for the first terminal. After receiving the indication information, the first terminal can obtain the OCC sequence for the first terminal.

### 1.2 OCC sequence matrix including the respective OCC sequences for the multiple terminals.

After configuring the respective OCC sequences for the multiple terminals, the network device transmits indication information to the first terminal among the multiple terminals. The indication information includes an OCC sequence matrix including the respective OCC sequences for the multiple terminals. Since the first terminal is one of the multiple terminals, the OCC sequence matrix includes the OCC sequence for the first terminal. Upon receiving the indication information, the first terminal can obtain the OCC sequence matrix. Then, the first terminal determines the OCC sequence for the first terminal from the OCC sequence matrix.

### 1.3. OCC sequence index for the first terminal.

The OCC sequence index for the first terminal is used to indicate the OCC sequence for the first terminal in the OCC sequence matrix. After configuring the respective OCC sequences for the multiple terminals, the network device transmits indication information to the first terminal among the multiple terminals. The indication information includes the OCC sequence index for the first terminal. Upon receiving the indication information, the first terminal can determine the OCC sequence for the first terminal in the OCC sequence matrix using the OCC sequence index for the first terminal.

In some embodiments, the indication information can be carried by at least one of higher-layer parameters and Downlink Control Information (DCI). If the indication information is carried by DCI, it can be carried by adding a new DCI field and/or by using an existing DCI field.

Combining items 1.1 to 1.3 above, the network device explicitly or implicitly indicates the OCC sequence for the first terminal in various ways. Several specific examples are described below.

Example 1: The indication information is carried by higher-layer parameters. The indication information includes the OCC sequence for the first terminal. The network device transmits the indication information to the first terminal, and the first terminal can determine the OCC sequence for the first terminal after receiving the indication information.

Example 2: The indication information is carried by the DCI. The indication information includes the OCC sequence for the first terminal. The network device transmits the indication information to the first terminal, and the first terminal can determine the OCC sequence for the first terminal after receiving the indication information.

Example 3: The indication information includes an OCC sequence matrix and the OCC sequence index for the first terminal. The indication information is carried by higher-layer parameters and the DCI. The network device transmits the OCC sequence matrix to the first terminal through the higher-layer parameters and transmits the OCC sequence index for the first terminal to the first terminal through the DCI. The first terminal determines the OCC sequence for the first terminal from the OCC sequence matrix based on the OCC sequence index for the first terminal.

Example 4: The indication information includes an OCC sequence matrix, and is carried by higher-layer parameters or DCI. The network device transmits the OCC sequence matrix to the first terminal through the higher-layer parameters or DCI. The OCC sequence index for the first terminal is indicated by a terminal identifier of the first terminal. The first terminal determines the OCC sequence index for the first terminal through the terminal identifier of the first terminal, and then determines the OCC sequence for the first terminal from the OCC sequence matrix based on the OCC sequence index for the first terminal. One possible example is occ index = mod(ID, d), where occ index represents the OCC sequence index for the first terminal, ID represents the terminal identifier of the first terminal, d represents a number of spreading factors included in the OCC sequence for the first terminal, and mod represents a modulo operation. The value of d can be, for example, equal to a number of repetitions of the initial uplink data.

Example 5: The network device implicitly notifies the OCC sequence matrix by means of a number of repetition of the initial uplink data and notifies the OCC sequence index for the first terminal through indication information. For example, the first terminal has a pre-stored mapping relationship between the number of repetition and the OCC sequence index. Using the number of repetition of the initial uplink data and the mapping relationship, the OCC sequence index for the first terminal can be determined. Then, based on the OCC sequence index for the first terminal, the OCC sequence for the first terminal can be determined from the OCC sequence matrix.

Table 2 below illustrates a correspondence between an OCC sequence index and corresponding OCC sequence. As shown in Table 2, after determining the OCC sequence index for the first terminal through the mapping relationship between the number of repetition and the OCC sequence index, the OCC sequence wₙ for the first terminal can be determined. As shown in Table 2, for example, OCC index 0 corresponds to the OCC sequence including w₀, w₁, w₂, and

W3.

**Table 2**

| OCC sequence index | Wₙ |
|---|---|
| 0 | w₀, w₁, W2, W3 |
| 1 | W4, W5, W6, W7 |
| 2 | W8, W9, w₁₀, w₁₁ |
| 3 | W12, W13, W14, w₁₅ |

In some embodiments, the network device may pre-configure the transmission configuration parameter, where the transmission configuration parameter includes at least one of the following items 2.1 to 2.3.

### 2.1 The number of repetitions of the initial uplink data.

The number of repetitions of the initial uplink data refers to a number of times the initial uplink data is repeatedly transmitted, which may be one or more times.

### 2.2 The number of time-domain symbols used for data transmission.

The number of time-domain symbols used for data transmission refers to a number of time-domain symbols configured by the network device for transmitting data signals. The time-domain symbols configured by the network device include time-domain symbols used for data transmission and time-domain symbols used for DMRS transmission. In the embodiment of the present application, the time-domain symbols used for data transmission are the time-domain symbols configured by the network device, excluding the time-domain symbols used for DMRS transmission.

Taking a network device with a time-domain symbol length of L as an example, the number of time-domain symbols used for data transmission is L₁, and the number of time-domain symbols used for DMRS transmission is L₂. Therefore, L₁ = L - L₂. It should be noted that the L₁ time-domain symbols used for data transmission can be either consecutive or non-consecutive.

### 2.3 The number of slots for TBoMS.

The number of slots for TBoMS refers to a number of slots used to transmit one TB. Taking the number of slots for TBoMS being N as an example, N slots are used to transmit one TB. The network device may indicate the number of slots for TBoMS of N through the higher-layer parameter of numberOfSlotsTBoMS. If the network device does not configure the higher-layer parameter of numberOfSlotsTBoMS, one slot is used to transmit one TB.

In the above embodiments, the implementation of indicating the OCC sequence for the first terminal by using indication information is described. In the following, in conjunction with the accompanying drawings, an implementation scheme for processing the initial uplink data based on the OCC sequence for the first terminal and the transmission configuration parameter is described.

In some embodiments, the OCC sequence for the first terminal satisfies a condition that a number of spreading factors included in the OCC sequence for the first terminal is equal to a number of repetitions of the initial uplink data. The first terminal performs time-domain orthogonal spreading on each of multiple repetitions using the OCC sequence for the first terminal, thereby improving the uplink capacity of the system.

When a number of spreading factors included in the OCC sequence for the first terminal is equal to a number of repetitions of the initial uplink data, the target uplink data includes respective uplink data corresponding to multiple repetitions of transmission, where the respective uplink data corresponding to the multiple repetitions of transmission is a product of a corresponding spreading factor in the OCC sequence for the first terminal and the initial uplink data.

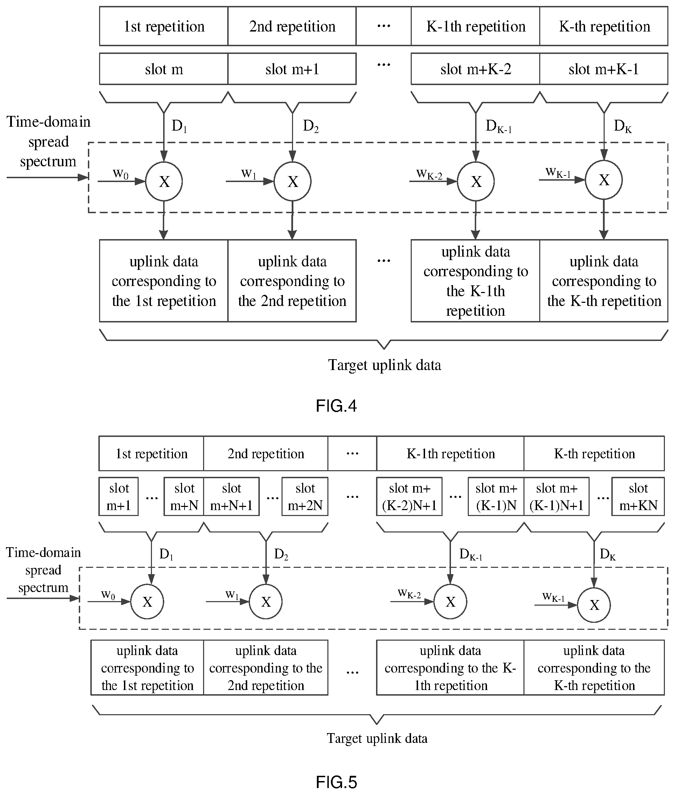

FIG.4 is a first schematic diagram of uplink transmission according to an embodiment of the present application. As shown in FIG.4, an example illustrates an uplink data transmission process when the number of spreading factors included in the OCC sequence for the first terminal is equal to the number of repetitions of the initial uplink data.

In the example of FIG.4, the number of repetitions of the initial uplink data is K, and the OCC sequence for the first terminal is [w₀, w₁, ..., w_{K-1}], where w₀, w₁, ..., w_{K-1} represent the K spreading factors in the OCC sequence for the first terminal.

If the network device does not configure the number of slots for TBoMS, or if the number of slots for TBoMS configured by the network device is 1, the first terminal transmits one TB, i.e., one piece of initial uplink data, through one slot. For example, in FIG.4, slot m is used to transmit initial uplink data for once, slot m+1 is used to transmit initial uplink data for once, and so on.

For any i-th repetition, the first terminal multiplies the i-th spreading factor in the OCC sequence for the first terminal with the initial uplink data. The result is the uplink data corresponding to the i-th repetition, which is then transmitted to the network device.

As shown in FIG.4, the initial uplink data is denoted as D, where for any i-th repetition, a corresponding initial uplink data is denoted as Dᵢ. Valid information on the initial uplink data corresponding to each repetition is the same, but redundant versions may be the same or different. That is, in the example in FIG.4, the valid information included in D₁, D₂, ..., D_{K} is the same, but D₁, D₂, ..., D_{K} may be the same or different. For the first repetition, multiplying the first spreading factor w₀ in the OCC sequence for the first terminal with the initial uplink data D₁ yields the uplink data w₀*D₁ corresponding to the first repetition; for the second repetition, multiplying the second spreading factor w₁ in the OCC sequence for the first terminal with the initial uplink data D₂ yields the uplink data w₁*D₂ corresponding to the second repetition; ...; for the Kth repetition, multiplying the Kth spreading factor w_{K-1} in the OCC sequence for the first terminal with the initial uplink data D_{K} yields the uplink data w_{K-1}*D_{K} corresponding to the Kth repetition.

Since the OCC sequences for any two terminals among the multiple terminals are orthogonal to each other, the multiple terminals can be supported to transmit uplink data on the same resources, and the maximum number of supported terminals depends on a length of the OCC sequence. Based on the example in FIG.4, it can be known that, without adopting time-domain spread spectrum, K slots only support one terminal to perform K repetitions. However, with adopting the time-domain spread spectrum, K slots support K terminals to perform K repetitions, thus improving the uplink capacity of the system.

FIG.5 is a second schematic diagram of uplink transmission according to the embodiment of the present application. As shown in FIG.5, the example illustrates the uplink data transmission process when the number of spreading factors included in the OCC sequence for the first terminal is equal to the number of repetitions of the initial uplink data.

In the example in FIG.5, the number of repetitions of the initial uplink data is K, and the OCC sequence for the first terminal is [w₀, w₁, ..., w_{K-1}], where w₀, w₁, ..., w_{K-1} represent the K spreading factors in the OCC sequence for the first terminal.

If the number of slots for TBoMS configured by the network device is N, the first terminal transmits one TB, i.e., one piece of initial uplink data, through N slots. For example, in FIG. 5, slots m+1 to m+N are used to transmit initial uplink data for once, slots m+N+1 to m+2N are used to transmit initial uplink data for once, and so on. The value of N may be, for example, 2, 4, 8, etc.

For any i-th repetition, the first terminal multiplies the i-th spreading factor in the OCC sequence for the first terminal with the initial uplink data. The result is the uplink data corresponding to the i-th repetition, which is then transmitted to the network device.

As shown in FIG.5, the initial uplink data is represented by D, where the corresponding initial uplink data for any i-th repetition is represented by Dᵢ. The valid information on the initial uplink data corresponding to each repetition is the same, but the redundant versions may be same or different. That is, in the example of FIG.5, the valid information included in D₁, D₂, ..., D_{K} is the same, and D₁, D₂, ..., D_{K} may be same or different.

Since the number of Slots for TBoMS is N, time domain resources allocated for each initial uplink data transmission are in multiple slots. Therefore, when performing orthogonal time domain spreading, the K spreading spectra are multiplied by the data of each repetition located in multiple slots. For the first repetition, the first spreading factor w₀ in the OCC sequence for the first terminal is multiplied by the initial uplink data of each slot from m+1 to m+N so as to obtain the uplink data w₀*D₁ corresponding to the first repetition; for the second repetition, the second spreading factor w₁ in the OCC sequence for the first terminal is multiplied by the initial uplink data of each slot from m+N+1 to m+2N so as to obtain the uplink data w₁*D₂ corresponding to the second repetition; ...; for the Kth repetition, the Kth spreading factor w_{K-1} in the OCC sequence for the first terminal is multiplied by the initial uplink data of each slot from m+(K-1)N+1 to m+KN so as to obtain the uplink data w_{K-1}*D_{K} corresponding to the Kth repetition.

Since the OCC sequences for any two terminals among the multiple terminals are orthogonal to each other, the multiple terminals can be supported to transmit uplink data on the same resources. The maximum number of supported terminals depends on the length of the OCC sequence. Based on the example in FIG.5, it can be known that, without adopting time-domain spread spectrum, K slots only support one terminal for K repetitions. However, with adopting the time-domain spread spectrum, K slots support K terminals for K repetitions, thus improving the uplink capacity of the system.

In some embodiments, the OCC sequence for the first terminal satisfies a condition that the number of spreading factors included in the OCC sequence for the first terminal is equal to the number of time-domain symbols mapped to the initial uplink data, where the number of time-domain symbols mapped to the initial uplink data is equal to the number of time-domain symbols used for data transmission, or is equal to a product of the number of time-domain symbols used for data transmission and the number of slots for TBoMS.

When the number of spreading factors included in the OCC sequence for the first terminal is equal to the number of time-domain symbols mapped to the initial uplink data, the target uplink data includes respective target time-domain data corresponding to the multiple time-domain symbols.

For each time-domain symbol, the target time-domain data corresponding to the time-domain symbol is equal to a product of the initial time-domain data mapped from the initial uplink data to the time-domain symbol and the spreading factor, to which the time-domain symbol corresponds, in the OCC sequence for the first terminal. The initial time-domain data on each time-domain symbol is signal data modulated by Orthogonal Frequency Division Multiplexing (OFDM), i.e., signal data obtained after performing Inverse Fast Fourier Transform (IFFT) and adding a Cyclic Prefix (CP).

Based on the OCC sequence for the first terminal, the first terminal multiplies each symbol of the OFDM-modulated time-domain signal by each spreading factor of the OCC sequence for the first terminal so as to obtain new data in each time domain which is transmitted to the network device. If the number of repetition of the initial uplink data configured by network device is greater than 1, the same OCC sequence is used repeatedly.

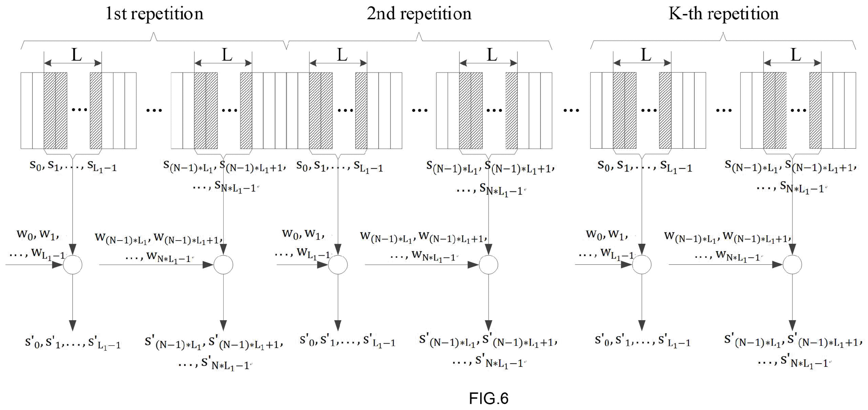

FIG.6 is a third schematic diagram of uplink transmission according to an embodiment of the present application. As shown in FIG.6, the uplink data transmission process when the number of spreading factors included in the OCC sequence for the first terminal is equal to the number of time-domain symbols mapped to the initial uplink data is illustrated.

In the example of FIG.6, the network device is configured with a time-domain symbol length of L, including L₂ (not shown in the figure) for DMRS transmission and L₁ for data transmission. The number of repetition for the initial uplink data is K, and thus the number of time-domain symbols mapped to the initial uplink data is N*L₁. The OCC sequence for the first terminal is [w₀, w₁, ..., w_{N*L1-1}], where w₀, w₁, ..., w_{N*L_1-1} represents the N*L₁ spreading factors in the OCC sequence for the first terminal.

The network device is configured with N slots for TBoMS, and thus the first terminal transmits one TB (one piece of initial uplink data unit) through N slots. If the number of spreading factors included in the OCC sequence for the first terminal is equal to the number of time-domain symbols mapped to the initial uplink data, either initial uplink data transmission for only once or K repetitions can be performed. Each repetition uses the same OCC sequence and the same processing method. The following is described taking the process for the first uplink transmission as an example.

As shown in FIG.6, for the first uplink transmission, the initial uplink data is transmitted through N slots. The number of time-domain symbols used for data transmission is L₁, and therefore the number of time-domain symbols mapped to the initial uplink data is N*L₁.

For any j-th time-domain symbol among N*L₁ time-domain symbols, the first terminal multiplies the j-th spreading factor in the OCC sequence for the first terminal with the initial time-domain data mapped from the initial uplink data to the j-th time-domain symbol. The result is the target time-domain data corresponding to the j-th time-domain symbol. The target uplink data includes respective target time-domain data corresponding to the N*L₁ time-domain symbols. The first terminal transmits the respective target time-domain data corresponding to the N*L₁ time-domain symbols to the network device.

As shown in FIG.6, s₀, s₁, ..., s_{L1-1} represent the initial time-domain data mapped from the initial uplink data to the first time-domain symbol, the initial time-domain data mapped from the initial uplink data to the second time-domain symbol, ..., the initial time-domain data mapped from the initial uplink data to the L₁-th time-domain symbol, respectively. Multiplying the first spreading factor w₀ in the OCC sequence for the first terminal by s₀ yields the target time-domain data s'₀ corresponding to the first time-domain symbol; multiplying the second spreading factor w₁ in the OCC sequence for the first terminal by si yields the target time-domain data s'₁ corresponding to the second time-domain symbol; ...; multiplying the L₁-th spreading factor w_{L1-1} in the OCC sequence for the first terminal by s_{L1-1} yields the target time-domain data *s'*_{L₁-1} corresponding to the L₁-th time-domain symbol. The process of mapping the initial uplink data to the initial time-domain data on other time-domain symbols is similar and is not elaborated herein.

Since the OCC sequences for any two terminals among the multiple terminals are orthogonal to each other, the multiple terminals can be supported to transmit uplink data on the same resources. The maximum number of supported terminals depends on the length of the OCC sequences. Based on the example in FIG.6, it can be known that, without adopting spread spectrum, K*N*L₁ time-domain symbols support uplink data transmission from only one terminal. However, with adopting spread spectrum, K*N*L₁ time-domain symbols support uplink data transmission from N*L₁ terminals, thus improving the uplink capacity of the system.

In summary, since the OCC sequences for any two terminals among the multiple terminals configured by the network device are orthogonal to each other, the target uplink data obtained after processing the initial uplink data using the OCC sequence for each terminal and the transmission configuration parameter can avoid cross-interference, enabling uplink data transmission from the multiple terminals on the same time-frequency resources, thereby improving the uplink capacity of the system.

In one embodiment, the embodiment shown in FIG.6 is a spread spectrum based on symbols, which can be used for repetitions or applied in a scenario where repetitions are not required.

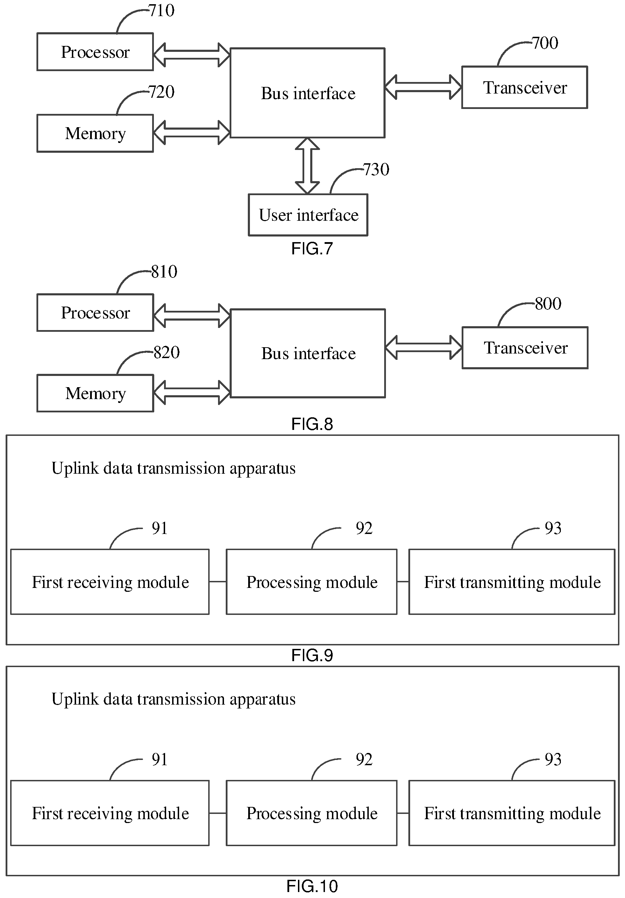

FIG.7 is a schematic structural diagram of a first terminal according to an embodiment of the present application. As shown in FIG.7, the first terminal includes a memory 720, a transceiver 700, and a processor 710.

The memory 720 is used to store a computer programs, the transceiver 700 is used to transmit and receive data under the control of the processor 710, and the processor 710 is used to read the computer program in the memory 720 and perform the operations of:
receiving indication information for indicating an OCC sequence for the first terminal transmitted from a network device, where the first terminal is one of multiple terminals, and the OCC sequences for any two terminals among the multiple terminals are orthogonal to each other;
processing initial uplink data based on the OCC sequence for the first terminal and a transmission configuration parameter so as to obtain target uplink data; and
transmitting the target uplink data to the network device.

In FIG.7, a bus architecture may include any number of interconnected buses and bridges, specifically linked together by various circuits of one or more processors represented by processor 710 and those of memories represented by the memory 720. The bus architecture may also link together various other circuits such as a peripheral device, a voltage regulator, and a power management circuit, which are well known in the art and therefore is not further described herein. The bus interface provides an interface. The transceiver 700 may be multiple components, including a transmitter and a receiver, providing a unit for communicating with various other devices over a transmission medium, including a wireless channel, a wired channel, an optical cable, etc. For different user equipment, the user interface 730 may also be an interface capable of connecting external and internal devices, including but not limited to a keypad, a display, a speaker, a microphone, a joystick, etc.

The processor 710 is responsible for managing the bus architecture and general processing, and the memory 720 may store data used by the processor 710 during operation.

In some embodiments, the processor 710 may be a Central Processing Unit (CPU), an Application-Specific Integrated Circuit (ASIC), a Field-Programmable Gate Array (FPGA), or a Complex Programmable Logic Device (CPLD). The processor may also employ a multi-core architecture.

The processor executes any of the methods according to the embodiments of the present application by calling a computer program stored in the memory according to obtained executable instructions. The processor and the memory may also be physically separated.

In some embodiments, the indication information includes at least one of the following:
the OCC sequence for the first terminal;
an OCC sequence matrix including respective OCC sequences for the multiple terminals; or
an OCC sequence index for the first terminal.

In some embodiments, the indication information is carried by at least one of:
a higher-layer parameter; or
DCI.

In some embodiments, the transmission configuration parameter includes at least one of:
a number of repetitions of the initial uplink data;
a number of time-domain symbols used for data transmission; or
a number of slots for TBoMS.

In some embodiments, the OCC sequence for the first terminal satisfies any one of:
a number of spreading factors included in the OCC sequence for the first terminal being equal to a number of repetitions of the initial uplink data; or
a number of spreading factors included in the OCC sequence for the first terminal being equal to a number of time-domain symbols mapped to the initial uplink data, where the number of time-domain symbols mapped to the initial uplink data is equal to a number of time-domain symbols used for data transmission, or is equal to a product of the number of time-domain symbols used for data transmission and a number of slots for TBoMS.

In some embodiments, when the number of spreading factors included in the OCC sequence for the first terminal is equal to the number of repetitions of the initial uplink data, the target uplink data includes respective uplink data corresponding to multiple repetitions of transmission.

Herein, the respective uplink data corresponding to the multiple repetitions of transmission is a product of a corresponding spreading factor in the OCC sequence for the first terminal and the initial uplink data.

In some embodiments, when the number of spreading factors included in the OCC sequence for the first terminal is equal to the number of time-domain symbols mapped to the initial uplink data, the target uplink data includes respective target time-domain data corresponding to the multiple time-domain symbols.

Herein, for each time-domain symbol, the target time-domain data corresponding to the time-domain symbol is equal to a product of the initial time-domain data mapped from the initial uplink data to the time-domain symbol and a spreading factor, to which the time-domain symbol corresponds, in the OCC sequence for the first terminal.

It should be noted that the first terminal according to the embodiment of the present application can implement all the method steps implemented by the method embodiment where an execution body is the first terminal, and can achieve the same technical effect. Therefore, the parts and beneficial effects identical to those in the method embodiment is not described in detail herein.

FIG.8 is a schematic structural diagram of a network device according to the embodiment of the present application. As shown in FIG.8, the network device includes a memory 820, a transceiver 800, and a processor 810.

The memory 820 is used to store a computer program, the transceiver 800 is used to transmit and receive data under the control of the processor 810, and the processor 810 is used to read the computer program in the memory 820 and perform the operations of:
transmitting indication information for indicating an OCC sequence for a first terminal to the first terminal, where the first terminal is one of multiple terminals, and the OCC sequences for any two terminals among the multiple terminals are orthogonal to each other; and
receiving target uplink data transmitted from the first terminal, where the target uplink data is data obtained by processing initial uplink data based on the OCC sequence for the first terminal and a transmission configuration parameter.

Specifically, the transceiver 800 is used to receive and transmit data under the control of the processor 810.

In FIG.8, a bus architecture may include any number of interconnected buses and bridges, specifically linked together by various circuits of one or more processors represented by processor 810 and those of memories represented by the memory 820. The bus architecture may also link together various other circuits such as a peripheral device, a voltage regulator, and a power management circuit, which are well known in the art and therefore is not further described herein. The bus interface provides an interface. The transceiver 800 may be multiple components, including a transmitter and a receiver, providing a unit for communicating with various other devices over a transmission medium, including a wireless channel, a wired channel, an optical cable, etc. The processor 810 is responsible for managing the bus architecture and general processing, while the memory 820 can store the data used by the processor 810 during operation.

In an embodiment, the processor 810 may be a CPU, ASIC, FPGA, or CPLD, and the processor may also employ a multi-core architecture.

The processor executes any of the methods according to the embodiments of the present application by calling a computer program stored in memory according to obtained executable instructions. The processor and memory may also be physically separated.

In some embodiments, the indication information includes at least one of the following:
the OCC sequence for the first terminal;
an OCC sequence matrix including respective OCC sequences for the multiple terminals; or
an OCC sequence index for the first terminal.

In some embodiments, the indication information is carried by at least one of:
a higher-layer parameter; or
DCI.

In some embodiments, the transmission configuration parameter includes at least one of:
a number of repetitions of the initial uplink data;
a number of time-domain symbols used for data transmission; or
a number of slots for TBoMS.

In some embodiments, the OCC sequence for the first terminal satisfies any one of:
a number of spreading factors included in the OCC sequence for the first terminal being equal to a number of repetitions of the initial uplink data; or
a number of spreading factors included in the OCC sequence for the first terminal being equal to a number of time-domain symbols mapped to the initial uplink data, where the number of time-domain symbols mapped to the initial uplink data is equal to a number of time-domain symbols used for data transmission, or is equal to a product of the number of time-domain symbols used for data transmission and a number of slots for TBoMS.

In some embodiments, when the number of spreading factors included in the OCC sequence for the first terminal is equal to the number of repetitions of the initial uplink data, the target uplink data includes respective uplink data corresponding to multiple repetitions of transmission.

Herein, the respective uplink data corresponding to the multiple repetitions of transmission is a product of a corresponding spreading factor in the OCC sequence for the first terminal and the initial uplink data.

In some embodiments, when the number of spreading factors included in the OCC sequence for the first terminal is equal to the number of time-domain symbols mapped to the initial uplink data, the target uplink data includes respective target time-domain data corresponding to the multiple time-domain symbols.

Herein, for each time-domain symbol, the target time-domain data corresponding to the time-domain symbol is equal to a product of the initial time-domain data mapped from the initial uplink data to the time-domain symbol and the spreading factor, to which the time-domain symbol corresponds, in the OCC sequence for the first terminal.

It should be noted that the network device according to the embodiment of the present application can implement all the method steps implemented by the method embodiment where an execution body is a network device, and can achieve the same technical effect. Therefore, the parts and beneficial effects that are the same as those in the method embodiment is not described in detail herein.

FIG.9 is a schematic structural diagram of an uplink data transmission apparatus according to the embodiment of the present application, which is used in a first terminal. As shown in FIG.9, the apparatus includes:
a first receiving module 91 for receiving indication information for indicating an OCC sequence for the first terminal transmitted from a network device, where the first terminal is one of multiple terminals, and the OCC sequences for any two terminals among the multiple terminals are orthogonal to each other;
a processing module 92 for processing initial uplink data based on the OCC sequence for the first terminal and a transmission configuration parameter so as to obtain target uplink data; and
a first transmitting module 93 for transmitting the target uplink data to the network device.

In some embodiments, the indication information includes at least one of the following:
the OCC sequence for the first terminal;
an OCC sequence matrix including respective OCC sequences for the multiple terminals; or
an OCC sequence index for the first terminal.

In some embodiments, the indication information is carried by at least one of:
a higher-layer parameter; or
DCI.

In some embodiments, the transmission configuration parameter includes at least one of:
a number of repetitions of the initial uplink data;
a number of time-domain symbols used for data transmission; or
a number of slots for TBoMS.

In some embodiments, the OCC sequence for the first terminal satisfies any one of:
a number of spreading factors included in the OCC sequence for the first terminal being equal to a number of repetitions of the initial uplink data; or
a number of spreading factors included in the OCC sequence for the first terminal being equal to a number of time-domain symbols mapped to the initial uplink data, where the number of time-domain symbols mapped to the initial uplink data is equal to a number of time-domain symbols used for data transmission, or is equal to a product of the number of time-domain symbols used for data transmission and a number of slots for TBoMS.

In some embodiments, when the number of spreading factors included in the OCC sequence for the first terminal is equal to the number of repetitions of the initial uplink data, the target uplink data includes respective uplink data corresponding to multiple repetitions of transmission.

Herein, the respective uplink data corresponding to the multiple repetitions of transmission is a product of a corresponding spreading factor in the OCC sequence for the first terminal and the initial uplink data.

In some embodiments, when the number of spreading factors included in the OCC sequence for the first terminal is equal to the number of time-domain symbols mapped to the initial uplink data, the target uplink data includes respective target time-domain data corresponding to the multiple time-domain symbols.

Herein, for each time-domain symbol, the target time-domain data corresponding to the time-domain symbol is equal to a product of the initial time-domain data mapped from the initial uplink data to the time-domain symbol and the spreading factor, to which the time-domain symbol corresponds, in the OCC sequence for the first terminal.

Specifically, the uplink data transmission apparatus according to the embodiment of the present application can implement all the method steps implemented in the method embodiment where the execution body is a first terminal, and can achieve the same technical effect. Therefore, the parts and beneficial effects that are the same as those in the method embodiment is not described in detail herein.

FIG.10 is a second schematic structural diagram of the uplink data transmission apparatus according to the embodiment of the present application, which is used in a network device. As shown in FIG.10, the apparatus includes:
a second transmitting module 101 for transmitting indication information for indicating an OCC sequence for a first terminal to the first terminal, where the first terminal is one of multiple terminals, and the OCC sequences for any two terminals among the multiple terminals are orthogonal to each other; and
a second receiving module 102 for receiving target uplink data transmitted from the first terminal, where the target uplink data is data obtained by processing initial uplink data based on the OCC sequence for the first terminal and a transmission configuration parameter.

In some embodiments, the indication information includes at least one of:
the OCC sequence for the first terminal;
an OCC sequence matrix including respective OCC sequences for the multiple terminals; or
an OCC sequence index for the first terminal.

In some embodiments, the indication information is carried by at least one of:
a higher-layer parameter; or
DCI.

In some embodiments, the transmission configuration parameter includes at least one of:
a number of repetitions of the initial uplink data;
a number of time-domain symbols used for data transmission; or
a number of slots for TBoMS.

In some embodiments, the OCC sequence for the first terminal satisfies any one of:
a number of spreading factors included in the OCC sequence for the first terminal being equal to a number of repetitions of the initial uplink data; or
a number of spreading factors included in the OCC sequence for the first terminal being equal to a number of time-domain symbols mapped to the initial uplink data, where the number of time-domain symbols mapped to the initial uplink data is equal to a number of time-domain symbols used for data transmission, or is equal to a product of the number of time-domain symbols used for data transmission and a number of slots for TBoMS.

In some embodiments, when the number of spreading factors included in the OCC sequence for the first terminal is equal to the number of repetitions of the initial uplink data, the target uplink data includes respective uplink data corresponding to multiple repetitions of transmission.

Herein, the respective uplink data corresponding to the multiple repetitions of transmission is a product of a corresponding spreading factor in the OCC sequence for the first terminal and the initial uplink data.

In some embodiments, when the number of spreading factors included in the OCC sequence for the first terminal is equal to the number of time-domain symbols mapped to the initial uplink data, the target uplink data includes respective target time-domain data corresponding to the multiple time-domain symbols.

Herein, for each time-domain symbol, the target time-domain data corresponding to the time-domain symbol is equal to a product of the initial time-domain data mapped from the initial uplink data to the time-domain symbol and the spreading factor, to which the time-domain symbol corresponds, in the OCC sequence for the first terminal.

Specifically, the uplink data transmission apparatus according to the embodiment of the present application can implement all the method steps implemented in the above-mentioned method embodiment where the execution body is a network device, and can achieve the same technical effect. Therefore, the parts and beneficial effects that are the same as those in the method embodiment is not described in detail herein.

It should be noted that divisions of units/modules in the above embodiments of the present application is illustrative and only represents a logical functional division. In actual implementation, there may be other division methods. Furthermore, functional units in various embodiments of the present application may be integrated into one processing unit, or each separate unit can exist physically, or two or more units can be integrated into one unit. The integrated unit can be implemented in hardware or as a software functional unit.

When an integrated unit is implemented as a software functional unit and sold or used as an independent product, it can be stored in a processor-readable storage medium. Based on such understanding, the technical solution of the present application, in essence, or the part that contributes to the related art, or all or part of the technical solution, can be embodied in the form of a software product stored in a storage medium and includes several instructions to cause a computer device (which may be a personal computer, server, or network device, etc.) or processor to execute all or part of the steps of the methods of the various embodiments of the present application. The aforementioned storage medium includes various media capable of storing program code, such as a USB flash drive, a portable hard drive, a Read-Only Memory (ROM), a Random Access Memory (RAM), a magnetic disk, or an optical disk.

According to some embodiments, there is also provided a computer-readable storage medium, which stores a computer program for causing a computer to execute the uplink data transmission method according to the above-described method embodiments.

Specifically, the computer-readable storage medium provided in the embodiments of the present application can implement all the method steps implemented in the above-described method embodiments and can achieve the same technical effects. Therefore, the parts and beneficial effects that are the same as those in the method embodiments are not described in detail herein.

It should be noted that a computer-readable storage medium may be any available medium or data storage device that a processor can access, including but not limited to magnetic storage (e.g., a floppy disk, a hard disk, a magnetic tape, a magneto-optical disk (MO), etc.), optical storage (e.g., a CD, a DVD, a BD, a HVD, etc.), and semiconductor storage (e.g., a ROM, an EPROM, an EEPROM, a non-volatile memory (NAND flash), a solid-state drive (SSD), etc.).

It should also be noted that the terms "first," "second," etc., in the embodiments of the present application are used to distinguish similar objects, not to describe a specific order or sequence. It should be understood that such terms may be interchanged where appropriate so that embodiments of the present application can be implemented in orders other than those illustrated or described herein, and the objects distinguished by "first" and "second" are generally of the same class, not limited in number. For example, the first object may be one or more.

In the embodiments of the present application, the term "and/or" describes a relationship between related objects, indicating that three relationships may exist. For example, A and/or B may represent: A existing alone, A and B existing simultaneously, and B existing alone. The character "/" generally indicates that the preceding and following related objects have an "or" relationship.

In the embodiments of the present application, the term "multiple" refers to two or more, and other quantifiers are similar.

The technical solutions provided in the embodiments of the present application may be applied to various systems, especially 5G systems. For example, applicable systems may include Global System for Mobile Communication (GSM), Code Division Multiple Access (CDMA), Wideband Code Division Multiple Access (WCDMA) GPRS, LTE, LTE Frequency Division Duplex (FDD), LTE Time Division Duplex (TDD), Long Term Evolution Advanced (LTE-A), Universal Mobile Telecommunications System (UMTS), Worldwide Interoperability for Microwave Access (WiMAX), and 5G NR systems. All of these systems include terminal equipment and network equipment. The system may also include a core network component, such as Evolved Packet System (EPS) or 5G system (5GS).

The terminal device involved in the embodiments of the present application may be a device that provides voice and/or data connectivity to a user, a handheld device with wireless connectivity, or other processing devices connected to a wireless modem. The name of the terminal device may differ in different systems. For example, in a 5G system, the terminal device may be called User Equipment (UE). A wireless terminal device may communicate with one or more core networks (CNs) via the RAN. The wireless terminal device may be a mobile terminal device, such as a mobile phone (or "cellular" phone) and a computer with a mobile terminal device, for example, a portable, pocket-sized, handheld, computer-embedded, or vehicle-mounted mobile device. The wireless terminal device exchanges voice and/or data with a wireless access network. Examples include a Personal Communication Service (PCS) phone, a cordless phone, a Session Initiated Protocol (SIP) phone, a Wireless Local Loop (WLL) station, a Personal Digital Assistant (PDA), and the like. The wireless terminal device may also be referred to as a system, subscriber unit, subscriber station, mobile station, mobile station, remote station, access point, remote terminal, access terminal, user terminal, user agent, or user device, to which it is not limited in the embodiments of the present application.

The network device involved in the embodiments of the present application may be a base station, which may include multiple cells providing service to a terminal. Depending on specific application scenarios, the base station may also be called an access point, or a device in the access network that communicates with the wireless terminal device through one or more sectors on an air interface, or other names. The network device may be used to exchange received air frames with IP packets, acting as a router between the wireless terminal device and the rest of the access network, where the rest of the access network may include an IP communication network. The network device may also coordinate attribute management of the air interface. For example, the network equipment involved in the embodiments of the present application may be a Base Transceiver Station (BTS) in a Global System for Mobile communications (GSM) or Code Division Multiple Access (CDMA) system, a NodeB in a wide-band Code Division Multiple Access (WCDMA) system, an evolved Node B (eNB or e-NodeB) in an LTE system, a 5G base station (gNB) in a next-generation 5G network architecture, a Home evolved Node B (HeNB), a relay node, a femto, a pico, etc., to which it is not limited in the embodiments of the present application. In some network structures, the network equipment may include a CU node and a DU node, and the centralized unit and the distributed unit may also be geographically separated.

Network devices and terminal devices may each use one or more antennas for Multiple Input Multiple Output (MIMO) transmission. MIMO transmission may be Single User MIMO (SU-MIMO) or Multiple User MIMO (MU-MIMO). Depending on configuration and number of antenna combinations, MIMO transmission may be 2D-MIMO, 3D-MIMO, FD-MIMO, or massive-MIMO, and may also be diversity transmission, pre-coded transmission, or beamforming transmission, etc.

Those skilled in the art should understand that embodiments of the present application may be provided as a method, a system, or a computer program product. Therefore, the present application may take the form of a completely hardware embodiment, a completely software embodiment, or an embodiment combining software and hardware aspects. Moreover, the present application may take the form of a computer program product implemented on one or more computer-usable storage media (including but not limited to disk storage and optical storage) containing computer-usable program code.

The present application is described with reference to flowchart and/or block diagrams of methods, devices (systems), and computer program products according to embodiments of the present application. It shall be understood that each flow and/or block of the flowchart and/or block diagrams, and combinations of flows and/or blocks in the flowchart and/or block diagrams, can be implemented by computer-executable instructions. These computer-executable instructions can be provided to a processor of a general-purpose computer, special-purpose computer, embedded processor, or other programmable data processing apparatus to produce a machine, such that the instructions, executed via the processor of the computer or other programmable data processing apparatus, create means for implementing the functions specified in one or more flows of the flowchart and/or one or more blocks of the block diagrams.

These processor-executable instructions may also be stored in a processor-readable memory capable of directing a computer or other programmable data processing apparatus to function in a particular manner, such that the instructions stored in the processor-readable memory produce an article of manufacture including instruction means that implement the functions specified in one or more flows of the flowcharts and/or one or more blocks of the block diagrams.

These processor-executable instructions may also be loaded onto a computer or other programmable data processing apparatus to cause a series of operational steps to be performed on the computer or other programmable apparatus to produce a computer-implemented process, such that the instructions, executed on the computer or other programmable apparatus, provide steps for implementing the functions specified in one or more flows of the flowcharts and/or one or more blocks of the block diagrams.

Those skilled in the art may make various modifications and variations to the present application without departing from the scope of the present application. Thus, if these modifications and variations of the present application fall within the scope of the claims of the present application and their equivalents, the present application also intends to encompass these modifications and variations.

## Claims

1. An uplink data transmission method performed by a first terminal, comprising:
receiving indication information for indicating an orthogonal cover code, OCC, sequence for the first terminal transmitted from a network device, wherein the first terminal is one of multiple terminals, and the OCC sequences for any two terminals among the multiple terminals are orthogonal to each other;
processing initial uplink data based on the OCC sequence for the first terminal and a transmission configuration parameter to obtain target uplink data; and
transmitting the target uplink data to the network device.

2. The method of claim 1, wherein the indication information comprises at least one of:
the OCC sequence for the first terminal;
an OCC sequence matrix comprising respective OCC sequences for the multiple terminals; or
an OCC sequence index for the first terminal.

3. The method of claim 1, wherein the indication information is carried by at least one of:
a higher-layer parameter; or
downlink control information, DCI.

4. The method of claim 1, wherein the transmission configuration parameter comprises at least one of:
a number of repetitions of the initial uplink data;
a number of time-domain symbols used for data transmission; or
a number of slots for transport block processing over multiple slots, TboMS.

5. The method of any of claims 1 to 4, wherein the OCC sequence for the first terminal satisfies any one of:
a number of spreading factors comprised in the OCC sequence for the first terminal being equal to a number of repetitions of the initial uplink data; or
a number of spreading factors comprised in the OCC sequence for the first terminal being equal to a number of time-domain symbols mapped to the initial uplink data, wherein the number of time-domain symbols mapped to the initial uplink data is equal to a number of time-domain symbols used for data transmission, or is equal to a product of the number of time-domain symbols used for data transmission and a number of slots for TBoMS.

6. The method of claim 5, wherein when the number of spreading factors comprised in the OCC sequence for the first terminal is equal to the number of repetitions of the initial uplink data, the target uplink data comprises respective uplink data corresponding to multiple repetitions of transmission, and
wherein the respective uplink data corresponding to the multiple repetitions of transmission is a product of a corresponding spreading factor in the OCC sequence for the first terminal and the initial uplink data.

7. The method of claim 5, wherein when the number of spreading factors comprised in the OCC sequence for the first terminal is equal to the number of time-domain symbols mapped to the initial uplink data, the target uplink data comprises respective target time-domain data corresponding to the multiple time-domain symbols, and
wherein, for each time-domain symbol, the target time-domain data corresponding to the time-domain symbol is equal to a product of initial time-domain data mapped from the initial uplink data to the time-domain symbol and a spreading factor, to which the time-domain symbol corresponds, in the OCC sequence for the first terminal.

8. An uplink data transmission method performed by a network device, comprising:
transmitting indication information for indicating an orthogonal cover code, OCC, sequence for a first terminal to the first terminal, wherein the first terminal is one of multiple terminals, and the OCC sequences for any two terminals among the multiple terminals are orthogonal to each other; and
receiving target uplink data transmitted from the first terminal, wherein the target uplink data is data obtained by processing initial uplink data based on the OCC sequence for the first terminal and a transmission configuration parameter.

9. The method of claim 8, wherein the indication information comprises at least one of:
the OCC sequence for the first terminal;
an OCC sequence matrix comprising respective OCC sequences for the multiple terminals; or
an OCC sequence index for the first terminal.

10. The method of claim 8, wherein the indication information is carried by at least one of:
a higher-layer parameter; or
downlink control information, DCI.

11. The method of claim 8, wherein the transmission configuration parameter comprises at least one of:
a number of repetitions of the initial uplink data;
a number of time-domain symbols used for data transmission; or
a number of slots for transport block processing over multiple slots, TBoMS.

12. The method of any of claims 8 to 11, wherein the OCC sequence for the first terminal satisfies any one of:
a number of spreading factors comprised in the OCC sequence for the first terminal being equal to a number of repetitions of the initial uplink data; or
a number of spreading factors comprised in the OCC sequence for the first terminal being equal to a number of time-domain symbols mapped to the initial uplink data, wherein the number of time-domain symbols mapped to the initial uplink data is equal to a number of time-domain symbols used for data transmission, or is equal to a product of the number of time-domain symbols used for data transmission and a number of slots for TBoMS.

13. The method of claim 12, wherein when the number of spreading factors comprised in the OCC sequence for the first terminal is equal to the number of repetitions of the initial uplink data, the target uplink data comprises respective uplink data corresponding to multiple repetitions of transmission, and
wherein the respective uplink data corresponding to the multiple repetitions of transmission is a product of a corresponding spreading factor in the OCC sequence for the first terminal and the initial uplink data.

14. The method of claim 12, wherein when the number of spreading factors comprised in the OCC sequence for the first terminal is equal to the number of time-domain symbols mapped to the initial uplink data, the target uplink data comprises respective target time-domain data corresponding to the multiple time-domain symbols, and
wherein, for each time-domain symbol, the target time-domain data corresponding to the time-domain symbol is equal to a product of initial time-domain data mapped from the initial uplink data to the time-domain symbol and a spreading factor, to which the time-domain symbol corresponds, in the OCC sequence for the first terminal.

15. A first terminal, comprising:
a memory used for storing a computer program;
a transceiver used for transmitting and receiving data under the control of a processor; and
the processor used for reading the computer program in the memory and perform operations of:
receiving indication information for indicating an orthogonal cover code, OCC, sequence for the first terminal transmitted from a network device, wherein the first terminal is one of multiple terminals, and the OCC sequences for any two terminals among the multiple terminals are orthogonal to each other;
processing initial uplink data based on the OCC sequence for the first terminal and a transmission configuration parameter to obtain target uplink data; and
transmitting the target uplink data to the network device.

16. The first terminal of claim 15, wherein the indication information comprises at least one of:
the OCC sequence for the first terminal;
an OCC sequence matrix comprising respective OCC sequences for the multiple terminals; or
an OCC sequence index for the first terminal.

17. The first terminal of claim 15, wherein the indication information is carried by at least one of:
a higher-layer parameter; or
downlink control information, DCI.

18. The first terminal of claim 15, wherein the transmission configuration parameter comprises at least one of:
a number of repetitions of the initial uplink data;
a number of time-domain symbols used for data transmission; or
a number of slots for transport block processing over multiple slots, TBoMS.

19. The first terminal of any of claims 15 to 18, wherein the OCC sequence for the first terminal satisfies any one of:
a number of spreading factors comprised in the OCC sequence for the first terminal being equal to a number of repetitions of the initial uplink data; or
a number of spreading factors comprised in the OCC sequence for the first terminal being equal to a number of time-domain symbols mapped to the initial uplink data, wherein the number of time-domain symbols mapped to the initial uplink data is equal to a number of time-domain symbols used for data transmission, or is equal to a product of the number of time-domain symbols used for data transmission and a number of slots for TBoMS.

20. The first terminal of claim 19, wherein when the number of spreading factors comprised in the OCC sequence for the first terminal is equal to the number of repetitions of the initial uplink data, the target uplink data comprises respective uplink data corresponding to multiple repetitions of transmission, and
wherein the respective uplink data corresponding to the multiple repetitions of transmission is a product of a corresponding spreading factor in the OCC sequence for the first terminal and the initial uplink data.

21. The first terminal of claim 19, wherein when the number of spreading factors comprised in the OCC sequence for the first terminal is equal to the number of time-domain symbols mapped to the initial uplink data, the target uplink data comprises respective target time-domain data corresponding to the multiple time-domain symbols, and
wherein, for each time-domain symbol, the target time-domain data corresponding to the time-domain symbol is equal to a product of initial time-domain data mapped from the initial uplink data to the time-domain symbol and a spreading factor, to which the time-domain symbol corresponds, in the OCC sequence for the first terminal.

22. A network device, comprising:
a memory used for storing a computer program;
a transceiver used for transmitting and receiving data under the control of a processor; and
the processor used for reading the computer program in the memory and perform operations of:
transmitting indication information for indicating an orthogonal cover code, OCC, sequence for a first terminal to the first terminal, wherein the first terminal is one of multiple terminals, and the OCC sequences for any two terminals among the multiple terminals are orthogonal to each other; and
receiving target uplink data transmitted from the first terminal, wherein the target uplink data is data obtained by processing initial uplink data based on the OCC sequence for the first terminal and a transmission configuration parameter.

23. The network device of claim 22, wherein the indication information comprises at least one of:
the OCC sequence for the first terminal;
an OCC sequence matrix comprising respective OCC sequences for the multiple terminals; or
an OCC sequence index for the first terminal.

24. The network device of claim 22, wherein the indication information is carried by at least one of:
a higher-layer parameter; or
downlink control information, DCI.

25. The network device of claim 22, wherein the transmission configuration parameter comprises at least one of:
a number of repetitions of the initial uplink data;
a number of time-domain symbols used for data transmission; or
a number of slots for transport block processing over multiple slots, TBoMS.

26. The first terminal of any of claims 22 to 25, wherein the OCC sequence for the first terminal satisfies any one of:
a number of spreading factors comprised in the OCC sequence for the first terminal being equal to a number of repetitions of the initial uplink data; or
a number of spreading factors comprised in the OCC sequence for the first terminal being equal to a number of time-domain symbols mapped to the initial uplink data, wherein the number of time-domain symbols mapped to the initial uplink data is equal to a number of time-domain symbols used for data transmission, or is equal to a product of the number of time-domain symbols used for data transmission and a number of slots for TBoMS.

27. The network device of claim 26, wherein when the number of spreading factors comprised in the OCC sequence for the first terminal is equal to the number of repetitions of the initial uplink data, the target uplink data comprises respective uplink data corresponding to multiple repetitions of transmission, and
wherein the respective uplink data corresponding to the multiple repetitions of transmission is a product of a corresponding spreading factor in the OCC sequence for the first terminal and the initial uplink data.

28. The network device of claim 26, wherein when the number of spreading factors comprised in the OCC sequence for the first terminal is equal to the number of time-domain symbols mapped to the initial uplink data, the target uplink data comprises respective target time-domain data corresponding to the multiple time-domain symbols, and
wherein, for each time-domain symbol, the target time-domain data corresponding to the time-domain symbol is equal to a product of initial time-domain data mapped from the initial uplink data to the time-domain symbol and a spreading factor, to which the time-domain symbol corresponds, in the OCC sequence for the first terminal.

29. An uplink data transmission apparatus used in a first terminal, comprising:
a first receiving module for receiving indication information for indicating an orthogonal cover code, OCC, sequence for the first terminal transmitted from a network device, wherein the first terminal is one of multiple terminals, and the OCC sequences for any two terminals among the multiple terminals are orthogonal to each other;
a processing module for processing initial uplink data based on the OCC sequence for the first terminal and a transmission configuration parameter to obtain target uplink data; and
a first transmitting module for transmitting the target uplink data to the network device.

30. An uplink data transmission apparatus used in a network device, comprising:
a second transmitting module for transmitting indication information for indicating an orthogonal cover code, OCC, sequence for a first terminal to the first terminal, wherein the first terminal is one of multiple terminals, and the OCC sequences for any two terminals among the multiple terminals are orthogonal to each other; and
a second receiving module for receiving target uplink data transmitted from the first terminal, wherein the target uplink data is data obtained by processing initial uplink data based on the OCC sequence for the first terminal and a transmission configuration parameter.

31. A processor-readable storage medium for storing a computer program for causing a computer to perform the uplink data transmission method of any of claims 1 to 7, or a computer program for causing a computer to perform the uplink data transmission method of any of claims 8 to 14.
